# EUROPEAN PATENT APPLICATION

(11) **EP 4 661 353 A1**
(43) Date of publication of application: **10.12.2025**
(21) Application number: 24208755.9
(22) Date of filing: 24.10.2024
(51) Int. Cl.: H04L 41/0631, H04L 41/0681, H04L 41/0833, H04L 41/0894

(54) **POWER SAVING BASED ON LINK DOWN DETECTION**

(30) Priority: 07.06.2024 US 202418737830
(71) Applicant: Juniper Networks, Inc., Sunnyvale, CA 94089-1206 (US)
(72) Inventor: MAHISHI, Shrish, Sunnyvale, 94089 (US); BILGI, Shashank Jagadish, Sunnyvale, 94089 (US); HN, Pradeep, Sunnyvale, 94089 (US)
(74) Representative: D Young & Co LLP

(57) **Abstract**

In general, this disclosure describes a network device comprising a physical interface comprising a port and a data path component; a storage device configured to store a power save profile for the network device, wherein the power save profile specifies one or more link down triggers each associated with a power saving action; and processing circuitry having access to the storage device. The processing circuitry may be configured to determine, based on a link fault associated with the port, a link down trigger of the one or more link down triggers specified in the power save profile. The processing circuitry may further be configured to execute the power saving action associated with the link down trigger to reduce power consumed by the data path component.

## Description

This application claims the benefit of US Patent Application No. 18/737,830, filed 7 June 2024, the entire contents of which is incorporated herein by reference.

### TECHNICAL FIELD

The invention relates to computer networks and, more particularly, to power saving techniques for network devices.

### BACKGROUND

A computer network is a collection of interconnected network devices that can exchange data and share resources. Example network devices include layer two devices that operate within the second layer of the Open Systems Interconnection (OSI) reference model, i.e., the data link layer, and layer three devices that operate within the third layer of the OSI reference model, i.e., the network layer. Network devices within computer networks often include a control unit that provides control plane functionality for the network device and forwarding components for routing or switching data units. Network devices may include a central processing unit (CPU), memory, physical layer components (PHY), high power optics and long reach coherent optics, logic components, fans, heatsinks, or the like. In some cases, a network device may include a plurality of packet forwarding engines (PFEs) and a switch fabric that collectively provide a forwarding plane for forwarding network traffic. High data rate optical networks (e.g., 100 Gbit/s and beyond) can be enabled by, for example, an optical M-ary quadrature amplitude modulation (M-QAM) scheme with digital signal processing (DSP). For example, network devices may include a transmitter side serializer/deserializer (SerDes) and/or a digital-to-analog converters (DACs), which are building blocks for spectrally efficient, multi-level signal generation and spectral manipulation.

### SUMMARY

Particular embodiments are set out in the independent claims. Various optional examples are set out in the dependent claims. In general, the disclosure specifies techniques for executing power saving actions in network devices based on power save profiles. A network device may be configured to obtain power saving profiles corresponding to various ports included in the network device. The network device may receive power saving profiles that define particular power saving actions the network device may execute based on link down triggers associated with a link fault. Based on the network device detecting a link fault, the network device may classify, based on one or more error messages associated with the detected link fault, the link fault as a particular link down trigger defining a type of link fault associated with the detected link fault. The network device may activate a power save profile corresponding to a port of the network device associated with the detected link fault. The network device may execute a set of power saving actions included in the activated power save profile based on the link down trigger associated with the detected link fault. In other words, the network device may execute a particular set of power saving actions based on the power saving actions mapped to the link down trigger in the activated power save profile.

The network device may initiate a link recovery state machine to reverse power saving actions once the detected link fault has been cleared or otherwise resolved. The network device may asynchronously determine whether a link fault has cleared by monitoring a status of the detected link fault. Based on the network device determining the link fault is cleared, the network device may reverse the power saving actions to bring the network device back into an operational condition. The network device may asynchronously initiate recovery of other network devices that may be associated with the detected link fault. For example, an operator may provide an indication to another network device specifying the detected link fault is cleared. The other network device may process the indication by, for example, executing any reverse power saving actions based on any power saving actions the other network device may have executed when the link fault was detected. In this way, the bidirectional link between the network device and the other network device may be restored.

The described techniques may provide one or more advantages. For example, the network device may automatically initiate power saving actions for a particular port of the network device to conserve resources (e.g., power consumption, processing cycles, etc.). Conventionally, network devices waste power or other computational resources by continuing to provide power to data path components of the network device, even when a link fault is detected and the data path components no longer carry any network traffic. The network device, according to the techniques described herein, may automatically execute power saving actions shortly after a link fault is detected; thereby, the network device may avoid wasting resources and avoid an administrator of the network device having to manually execute the power saving action for each network device that may experience a link fault. In addition, the network device may automatically reverse the power saving actions by executing reverse power saving actions specified by the power saving actions (e.g., disabling low power mode of data path components, reenabling data path components, etc.). In this way, the network device may automatically conserve resources, as well as automatically reverse any power saving actions to bring the network device to an operational state shortly after a link fault has been cleared with little to no action by an administrator of the network device. As another example advantage, by leveraging custom power save profiles, the techniques allow a network device administrator to flexibly configure power saving actions, on a per-port basis, for conservative or aggressive power saving actions according to preference.

In one example, a network device comprises a physical interface comprising a port and a data path component; a storage device configured to store a power save profile for the network device, wherein the power save profile specifies one or more link down triggers each associated with a power saving action; and processing circuitry having access to the storage device. The processing circuitry may be configured to determine, based on a link fault associated with the port, a link down trigger of the one or more link down triggers specified in the power save profile. The processing circuitry may further be configured to execute the power saving action associated with the link down trigger to reduce power consumed by the data path component.

In another example, a method includes storing, by a network device including a port and a data path component, a power save profile for the network device, wherein the power save profile specifies one or more link down triggers each associated with a power saving action. The method may further include determining, by the network device and based on a link fault associated with the port, a link down trigger of the one or more link down triggers specified in the power save profile. The method may further include executing, by the network device, the power saving action associated with the link down trigger to reduce power consumed by the data path component.

In yet another example, computer-readable storage media comprising instructions that, when executed, causes processing circuitry of a network device to store a power save profile for the network device, wherein the power save profile specifies one or more link down triggers each associated with a power saving action. The instructions may further cause the processing circuitry of the network device to determine, based on a link fault associated with a port of the network device, a link down trigger of the one or more link down triggers specified in the power save profile. The instructions may further cause the processing circuitry of the network device to execute the power saving action associated with the link down trigger to reduce power consumed by a data path component of the network device.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system with example network devices configured to execute power saving actions based on power save profiles, in accordance with principles described in this disclosure.
FIG. 2 is a block diagram illustrating an example network device configured to execute power saving actions, in accordance with principles described in this disclosure.
FIG. 3 is a conceptual diagram illustrating an example network device with example ports associated with power save profiles, in accordance with principles described in this disclosure.
FIG. 4 is a flow diagram illustrating an example network device configured to initiate and recover from power saving actions, in accordance with principles described in this disclosure.
FIGS. 5A and 5B are conceptual diagrams illustrating example network devices configured to execute power saving actions and asynchronously execute reverse power saving actions, in accordance with principles described in this disclosure.
FIG. 6 is a conceptual diagram illustrating example data path components configured to determine a link fault is cleared, in accordance with principles described in this disclosure.
FIG. 7 is a flow diagram illustrating an example process for executing power saving actions, in accordance with principles described in this disclosure.

Like reference characters denote like elements throughout the figures and text.

### DETAILED DESCRIPTION

In networks, links between network devices may go down due to many different types of link faults. For example, network devices may detect link faults of a link due to link errors associated with fiber cuts or damage, bad cables, issues with optics or hardware, or the like. Link faults may take significant amounts of time (e.g., days or weeks) to resolve, and are often the most frequently occurring fault type in networks, such as data centers or Wide Area Networks (WAN). Typically, when a network device detects a link fault, all data path components associated with the link (e.g., optics, physical layer port, ASIC port, Serdes, etc.) still consume power. This may result in a significant wastage of power, as the data path components are not operational and do not carry any traffic while continuing to be provided with full power. The techniques described herein include techniques for automatically executing, based on power save profiles, power saving actions based on particular link down triggers, as well as techniques for automatically executing, based on the power save profiles, reverse power saving actions based on the particular link down triggers being resolved or otherwise cleared.

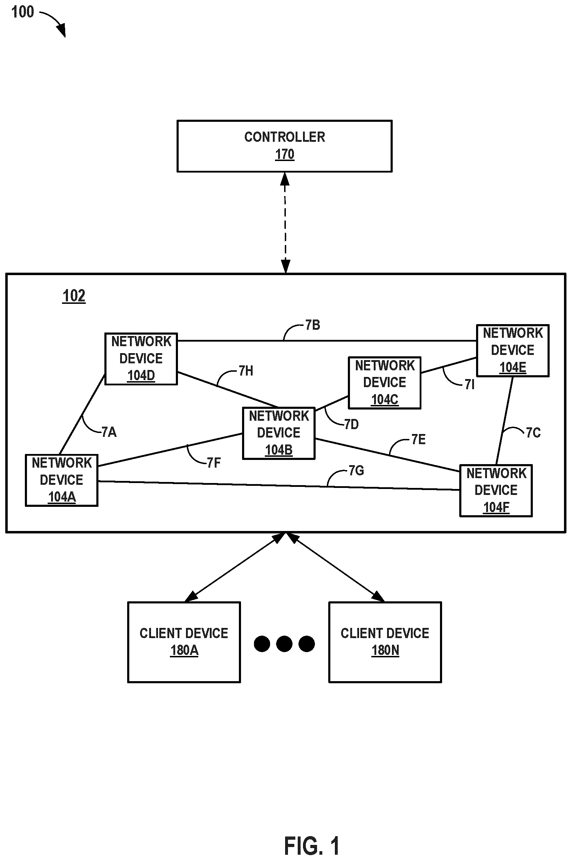

FIG. 1 is a block diagram illustrating example network system 100 with example network devices 104 configured to execute power saving actions based on power save profiles, in accordance with principles described in this disclosure. In the example of FIG. 1, network system 100 includes controller 170, network 102, and client devices 180A-180N (collectively referred to herein as client devices 180). Network 102 may include one or more data center networks, such as a software defined network (SDN), a three-tier hierarchical network, a spine-leaf (Clos) network, a spine-leaf (two-tier) network, a converged network, or the like. Network 102 may include a public network such as a wide area network (WAN), local area network (LAN), the Internet, virtual LAN (VLAN), enterprise LAN, a layer 3 virtual private network (VPN), a service provider network (e.g., an Internet Protocol (IP) intranet operated by a service provider), an enterprise IP network, an optical transport network (OTN), or some combination thereof. Various examples of network 102 may encompass many hundreds or even thousands of network devices 104.

In the example of FIG. 1, network 102 includes network devices 104 and links 7A-7I (collectively referred to herein as, "links 7"). Network devices 104 may include routers, switches, access points (AP), servers, or other device configured to support the operation of network 102. In instances where network 102 includes an OTN, network devices 104 may include optical communication devices (e.g., packet-optical transport devices) interconnected via optical links (e.g., links 7) and controlling transmission of optical signals carrying packet data along the optical links. Links 7 may include network links, virtual links, logical links, optical fiber links, or any combination thereof that connect network devices 104.

In accordance with the techniques described herein, one or more network devices 104 may initiate, based on a power save profile, power saving actions based on a fault in any one of links 7. Network devices 104 may obtain power save profiles that define particular power saving actions (e.g., power reduction functions of initiating lower power mode in an optics data path component of a port of network device 104A, disabling physical layer data path components of a port of network device 104A, lowering power classes of data path components of a port of network device 104A, etc.) for various types of errors associated with link faults (e.g., receiver loss of signal, Media Access Control [MAC] link failure, etc.) that may occur with any one of links 7. Network devices 104 may obtain power save profiles that correspond to various ports included in network devices 104. Network device 104 may be configured to obtain power save profiles based on a port associated with link faults. For example, network device 104A may obtain a first set of power save profiles based on a first port of network device 104A connected to link 7A and a second set of power save profiles based on a second port of network device 104A connected to link 7F. Network devices 104 may, for example, obtain power save profiles defined by an administrator of network system 100.

In some instances, network devices 104 may obtain power save profiles from controller 170. Controller 170 may be a network management system, an element management system, a software defined network controller, a network interface controller, or the like. Controller 170 may include a network controller that provides a central point for network orchestration, network device configuration, and/or exposure of higher level functionality of network devices via an application programming interface. In general, controller 170 may include a centralized, programmable point of automation that may manage, configure, monitor, and/or troubleshoot network infrastructures (e.g., network 102 and/or network device 104 of network 102). Controller 170 may be operated by an administrator of network 102. Controller 170 may communicate with network devices 104 of network 102 via a protocol (e.g., SNMP, NTP, DNS, Routing Information Protocol, DHCP, TCP/IP, SDLC, HDLC, SLIP, PPP, LAP, NCP, polling protocols, etc.). Controller 170 may configure network devices 104 with default power save profiles based on inherent characteristics of data path components included in network devices 104.

In some examples, client devices 180 may directly configure network devices 104 with power save profiles via a command line interface (CLI). For example, client devices 180 may be operated by an operator of network devices 104. Client devices 180 may communicate with network devices 104 of network 102 via a protocol (e.g., SNMP, NTP, DNS, Routing Information Protocol, DHCP, TCP/IP, SDLC, HDLC, SLIP, PPP, LAP, NCP, polling protocols, etc.). Client devices 180 may override default power save profiles of network devices with a customized power save profile created using client devices 180. Controller 170 may provide client devices 180 with a platform (e.g., application programming interfaces, standard development kits, etc.) to create the customized power save profiles. Client devices 180 may interact with the platform to create aggressive power save profiles and/or conservative power save profiles based on a design of a network (e.g., network 102) and with respect to default power save profiles (e.g., stored at network devices 104 via a configuration using controller 170).

Network devices 104 may detect link faults during operation of network devices 104. For example, network device 104A and/or network device 104D may detect a link fault associated with link 7A. Network devices 104 may detect link faults using various techniques based on the type of link associated with the link fault. For example, network device 104A may detect a link fault associated with link 7A via physical layer signaling (e.g., carrier detect, loss of signal, etc.), link status monitoring (e.g., link up/down events, link integrity checks, etc.), keepalive signals (e.g., heartbeat signals, bidirectional forwarding detection), fault detection protocols (e.g., Ethernet operations, administration, and maintenance, OAM, Synchronous Optical Networking/Synchronous Digital Hierarchy, SONET/SDH, etc.), simple network management protocol (SNMP), and/or manual monitoring and troubleshooting. Network devices 104 may classify the detected link fault. For example, in instances in which network device 104A is an optical communication device (e.g., optical transceiver), network device 104A may apply physical layer signaling to detect a link fault and classify the link fault as a link down trigger of receiver loss of optical signal (RX LOS) associated with the detected LOS. Network device 104A may classify link faults based on one or more error messages generated as a result of the detected link fault. In some instances, network device 104A may identify multiple link down triggers associated with a link fault based on multiple error messages associated with various data path components being output based on a detected link fault. In these instances, network device 104A may classify the link fault as a highest priority link down trigger based on a predefined priority of link down triggers defined based on inherent characteristics of data path components of ports of network devices 104. Network devices 104 may provide an indication of the detected link fault and corresponding link down trigger to a power save state machines executing at each network device of network devices 104.

Network devices 104 may activate a power save profile based on the detected link fault. For example, network device 104A may detect a link fault associated with a port of network device 104A and identify the link fault as corresponding to an LOS link down trigger or classification (e.g., receiver LOS is the highest priority link down trigger based on error messages output based on the detected link fault). Network devices 104A may retrieve the power save profile for the port associated with the detected LOS link down trigger. Network devices 104A may identify a set of power saving actions, stored as part of the power save profile, based on the set of power saving actions being mapped to the detected LOS link down trigger. Network device 104A may execute power saving actions to conserve resources of network device 104A while a port of network device 104A is inoperable as a result of the detected link fault. For example, network device 104A may initiate lower power mode, lower a power class, change an operation mode (e.g., reduce speed to consume less power), or disable data path components of a port associated with the detected link fault to conserve computational resources (e.g., power, processing cycles, etc.) of network device 104A. In another example, network device 104A may activate a power save profile by instructing optics components of network device 104A to disable a transmitter laser, enter low power mode, and/or lower a power class. Network device 104A may instruct PHY components to disable a line side SERDES, disable a host side SERDES, disable PCS, MAC, MACSec, PTP blocks individually or in combination, and/or change PHY port operation model by instructing the PHY port to operate at lower speeds when a link is down (e.g., changing operation model of PHY components to lower speeds such as 1G/10G to consume significantly less power compared to 400G/200G/100G speeds). Network device 104A may instruct ASIC components to disable a line-side SERDES, disable a fabric SERDES, and/or disable a PCS, MAC, MACSec, PTP block individually or in combination.

In some instances, network devices 104 may execute a link recovery state machine to reverse the power saving actions once the detected link fault has been resolved or is otherwise no longer an issue. Network devices 104 may execute a link recovery state machine based on activating the power save profile and/or executing the power saving actions. In some examples, network devices 104 may execute the link recovery state machine to asynchronously clear the link fault. In other examples, network devices 104 may obtain an indication from an administrator of network system 100 that the detected link fault has been cleared or otherwise resolved. Based on determining a detected link fault has been cleared, network devices 104 may execute reverse power saving actions that are opposite to the executed power saving actions (also referred to herein as "reverse power saving actions"). For example, network devices 104, based on determining the detected link fault is cleared, may disable lower power mode, increase the power class, restore the operation mode, and/or enable data path components of ports included in network devices 104.

The techniques may provide one or more advantages. For example, network devices 104 may conserve resources (e.g., power usage, processing cycles, etc.) by automatically executing, based on determined link down triggers associated with various link faults, power saving actions to reduce power consumed by data path components. Typically, data path components of network devices 104 continue to consume full power even when link faults are detected and the data path components are not carrying any network traffic. This problem is accentuated when network devices 104 include high speed ports (e.g., 1.6T, 800G, 400G, 200G, 100G, etc.) that may, for example, use high power optics (e.g., QSFP-DD, QSFP-28, DWDM, ZR, ZR-M, etc.) and high data rate components (e.g., SERDES, PCS/MAC/MACSec block in PHY and ASIC, etc.). For example, network devices 104 may include a data path component of a block (e.g., a PCS/MAC/MACsec block) of data path components with independent logic and/or processing circuitry having specialized functions and capable of being placed in reduced power modes. Network devices 104 may perform power saving actions to individual components included in a block of data path components and/or perform power saving actions to a combination of components included in the block of data path components. By automatically initiating particularly defined power save actions based on a particular link fault, network devices 104 may quickly reduce power consumed by data path components of network devices 140. In this way, an administrator of network system 100 may support green networking by implementing the techniques described herein to significantly reduce power wastage due to link faults.

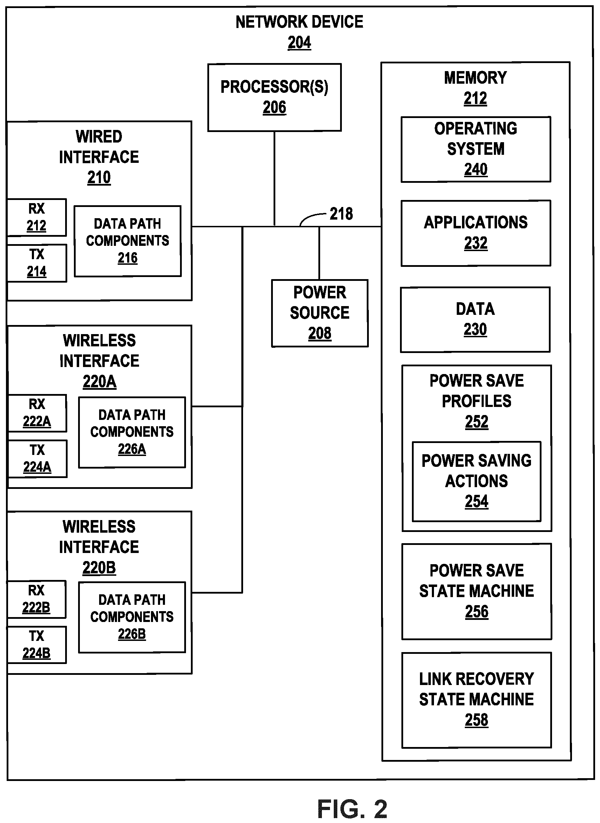

FIG. 2 is a block diagram illustrating example network device 204 configured to execute power saving actions, in accordance with principles described in this disclosure. Network device 204 of FIG. 2 may be an example or alternative implementation of any one of network devices 104 of FIG. 1. In the example of FIG. 2, network device 204 may include one or more processors 206, power source 208, memory 212, wired interface 210, and wireless interfaces 220A-220B (collectively referred to herein as, "wireless interfaces 220") coupled together via bus 218 over which the various elements may exchange data and information. Power source 208 may provide power to one or more components of network device 204. In some examples, power source 208 may include a battery, Power over Ethernet (PoE), power adapter (e.g., power cord that plugs into a standard electrical outlet), or the like. Power source 208 may provide power to components 206, 212, 210, and 220 of network device 204, for example.

Wired interface 210 may represent a physical network interface and includes a receiver 212 and a transmitter 214 for sending and receiving network communications, e.g., packets. Wired interface 210 may include optical transceivers (e.g., SFP, SFP+, QSFP/QSFP+, CFP2/CFP4, etc.), optical connectors (e.g., LC, SC, MTP/MPO, ST, etc.), Ethernet ports, serial interfaces, console ports, management Ethernet port, craft interface, monitoring ports (e.g., optical monitoring ports), clock and timing interfaces, or the like. Wired interface 210 couples, either directly or indirectly, network device 204 to a wired network device, such as one of network devices 104 of FIG. 1, within the wired network (e.g., network 102) via a cable, such as an optical fiber cable or Ethernet cable. In the example of FIG. 2, wired interface 210 may include data path components 216. Each port of wired interface 210 may include data path components 216, for example. Data path components 216 may include components of wired interface 210 configured to forward, process, manipulate, etc. data packets of network traffic, such as a forwarding engine, packet processing components, routing and switching components, access control and security components, quality of service (QoS) components, management and control plane components, and/or any combination thereof. For example, data path components 216 may include optics components (e.g., optical transmitters, optical amplifiers, fiber-optic infrastructure components, etc. for facilitating high speed communication over long distances), physical layer (PHY) components (e.g., components of a physical interface for coding and decoding of data between a digital system and a medium which signals are transmitted), ASIC components (e.g., an application-specific integrated circuit for high speed packet forwarding), SERDES (e.g., a parallel-to-serial or serial-to-parallel component for data conversion, impedance matching circuitry, clock data recovery functionality, etc.), or other components for a port of network device 204 associated with a link (e.g., links 7 of FIG. 1). In some examples, data path components 216 may include a block of components (e.g., PHY, PCS, MAC MACsec, PTP block; ASIC PCS, MAC block, etc.) with independent logic and/or processing circuitry having specialized functions and capable of being placed in reduced power modes.

First and second wireless interfaces 220A and 220B represent wireless network interfaces and include receivers 222A and 222B, respectively, each including a receive antenna via which network device 204 may receive wireless signals from wireless communications devices, such as network devices 104 of FIG. 1. First and second wireless interfaces 220A and 220B, in the example of FIG. 2, further include transmitters 224A and 224B, respectively, each including transmit antennas via which network device 204 may transmit wireless signals to wireless communications devices, such as network devices 104 FIG. 1. In some examples, first wireless interface 220A may implement a first communication protocol, such as WI-FI, and second wireless interface 220B may implement a second communication protocol, such as BLUETOOTH and/or a BLUETOOTH Low Energy (BLE). In the example of FIG. 2, wireless interfaces 220A and 220B may include data path components 226A and 226B (collectively referred to herein as, "data path components 226"), respectively. Data path components 226 may include components of corresponding wireless interfaces 220 configured to forward, process, manipulate, etc. data packets of network traffic, such as a forwarding engine, packet processing components, routing and switching components, access control and security components, quality of service (QoS) components, management and control plane components, and/or any combination thereof.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of network device 204. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including operating system 240, applications 232, data storage 230, power save profiles 252, power save state machine 256, and link recovery state machine 258. Operating system 240 may facilitate the communication of modules stored at memory 212 with processors 206. For example, operating system 240 may include a kernel that facilitates interactions with underlying hardware of network device 204 and provides a fully formed application space capable of executing a wide variety of software applications (e.g., application 232, power save state machine 256, link recovery state machine 258, etc.) having secure partitions in which each of the software applications executes to perform various operations. Applications 232 may include software application executed during operation of network device 204. Data storage 230 may store any data used and/or generated by network device 204, including data collected from monitoring and/or detecting link fault status associated with ports of network device 204.

Power save profiles 252 may include one or more power save profiles that each corresponds to a port of network device 204. For example, power save profiles 252 may include a first power save profile for a first port including a first subset of data path components of data path components 216, a second power save profile for a second port including a second subset of data path components of data path components 216, a third power save profile for a third port including a subset of data path components of data path components 226, and so on. In the example of FIG. 2, power save profiles 252 may include power saving actions 254. Power saving actions 254 may include sets of executable power saving actions (e.g., power reduction functions of data path components 216, 226) that network device 204 may execute to conserve resources (e.g., power) based on detecting a link fault. For example, power saving actions 254 may include power saving actions such as enabling low power mode for any of data path components 216 and/or data path components 226 or disabling any of data path components 216 and/or data path components 226. Power save profiles 252 may include a power save profile as a mapping of sets of power saving actions of power saving actions 254 to corresponding link down triggers that define link fault types or classification associated with detected link faults. For example, power save profiles 252 may include a power save profile that maps a first set of power saving actions of power saving actions 254 to a first link down trigger (e.g., receiver LOS) and maps a second set of power saving actions of power saving actions 254 to a second link down trigger (e.g., MAC LF). In some instances, power save profile 252 may include a priority for each link down trigger or an ordered list of link down triggers based on inherent features of data path components associated with the link down triggers.

In accordance with the techniques described herein, network device 204 may execute power saving actions based on power save profiles 252. Network device 204, or more specifically power save state machine 256, may detect a link fault associated with a port including a subset of data path components 216 or a subset of data path components 226. Power save state machine 256 may run on each port of network device 204 when a port of network device 204 establishes a link (e.g., link 7 of FIG. 1) with a port of another network device. Power save state machine 256 may determine a link down trigger associated with the detected link fault. Power save state machine 256 may determine or identify the link down trigger as a highest priority link down trigger of one or more link down triggers identified as being associated with error messages output based on the detected link fault. For example, power save state machine 256 may determine a set of link down triggers from one or more link down triggers stored as part of a power save profile. Power save state machine 256 may determine the set of link down triggers based on one or more error messages associated with the link fault. For example, power save state machine 256 may determine a first link down trigger of the set of link down triggers based on a first error message specifying the first link down trigger, a second link down trigger of the set of link down triggers based on a second error message specifying the second link down trigger, and so on. Power save state machine 256 may determine the link down trigger from the set of link down triggers by classifying a detected link fault according to a highest priority link down trigger of the set of link down triggers. In other words, power save state machine 256 may determine the link down trigger from the set of link down triggers based on a priority associated with each link down trigger of the set of link down triggers.

Power save state machine 256 may activate a power save profile of power save profiles 252 based on the determined link down trigger. Power save state machine 256 may activate a power save profile of power save profile 252 by identifying the set of power saving actions of power saving actions 254 that are associated with the determined link down trigger. Power save state machine 256 may execute the set of power saving actions of power saving actions 254 based on the set of power saving actions being mapped to the identified link down trigger associated with power save profiles 252. For example, power save state machine 256 may execute particular power saving actions of power saving actions 254 that lowers a power class, changes an operation mode, enable power save mode, or completely disable any one or more of data path components 216 and/or 226 of the interface having the port associated with the detected link fault. In this way, power save state machine 256 may reduce power consumption of power source 208 associated with data path components 216 and/or 226 that are not carrying any network traffic.

In some instances, power save state machine 256 may detect more than one error associated with a detected link fault. For example, power save state machine 256 may detect a first error associated with a first data path component, a second error associated with a second data path component, and so on. In this instance, power save state machine 256 may determine a link down trigger associated with each of the detected errors associated with the link fault. Power save state machine 256 may fetch and execute power saving actions of power saving actions 254 that are mapped to the highest priority link down trigger. Power save profiles 252 may include pre-defined priorities or hierarchies of link down trigger based on the particular architecture of network device 204 (e.g., hierarchical stack of ports associated with network device 204). Power save profiles 252 may include priorities of link down triggers based on inherent characteristics associated with different types or classes of the link does triggers. In other words, power save profiles 252 may include an ordered list (e.g., from an administrator of network device 204) of link down triggers based on inherent characteristics of a link down trigger associated with data path components of data path components 216 and/or 226 experiencing the link down trigger. For example, power save profiles 252 may include a list of link down triggers that may be ordered based on priority as follows: "physical layer link down triggers," "PCS layer link down triggers," and "MAC layer link down triggers." Power save profiles 252 may include a first grouping of link down triggers, such as Rx Loss of Signal (Rx LOS) or RX Loss of lock, in the "physical layer link down triggers" class. Power save profiles 252 may include a second grouping link down triggers, such as High Bit Error Rate (BER) or High Rate of FEC un-corrected Error, in the "PCS layer link down triggers" class. Power save profile 252 include a third grouping of link down triggers, such as MAC Local Fault (LF), in the "MAC layer link down triggers" class.

In the example above, power save state machine 256 may detect two link faults, such as Rx LOS and High BER. Power save state machine 256 may determine which of the two link faults are mapped to a higher priority based on the order or priority associated with the detected link faults. For example, power save state machine 256 may determine the Rx LOS link fault is a higher priority than the High BER link fault because Rx LOS is associated with a "physical layer link down triggers" class, which is ordered as a higher priority than the "PCS layer link down triggers" class which includes the High BER link fault. Power save state machine 256 may fetch the set of power saving actions associated with the Rx LOS link down trigger as the set of power saving actions 254 that may be executed.

Power save state machine 256 may send an indication to link recovery state machine 258 that the set of power saving actions of power saving actions 254 have been executed. In some instances, link recovery state machine 258 may subsequently obtain an indication that the detected link down trigger is cleared. Based on obtaining the indication that the detected link down trigger is cleared, link recovery state machine 258 may execute the reverse actions of the set of power saving actions executed by power save state machine 256.

In some examples, link recovery state machine 258 may automatically determine whether a link fault has cleared and reestablish operation of a port of network device 204. Link recovery state machine 258 may clear a link fault by determining that the link down trigger for the link fault has been resolved or is no longer applicable. For example, link recovery state machine 258 may obtain an indication from an administrator that the link fault has been resolved and/or link recovery state machine 258 may determine the link fault has been resolved by monitoring the status of the link associated with the link fault. In some instances, link recovery state machine 258 may obtain the indication from another network device in communication with network device 204 via a link associated with the detected link fault.

Link recovery state machine 258 may asynchronously clear link down triggers associated with network device 204 and/or another network device (e.g., network devices 104 of FIG. 1) also associated with the link fault. For example, based on link recovery state machine 258 determining a link down trigger has been resolved, link recovery state machine 258 may automatically execute the reverse power saving actions executed by power saving state machine 256. Once link recover state machine 258 has executed the reverse power saving actions, another network device associated with the link fault may detect a different link fault as the indication that the previously detected link fault is cleared, such as detecting a remote fault signal rather than another link fault error. The other network device may then perform corresponding reverse power saving actions based on obtaining the indication of a different link fault. In this way, network device 204 and/or other network devices associated with a link fault may asynchronously reverse any power saving actions with little to no input from an administrator of network device 204 and/or the other network devices, as well as no additional signals to synchronize network devices on both ends of a link.

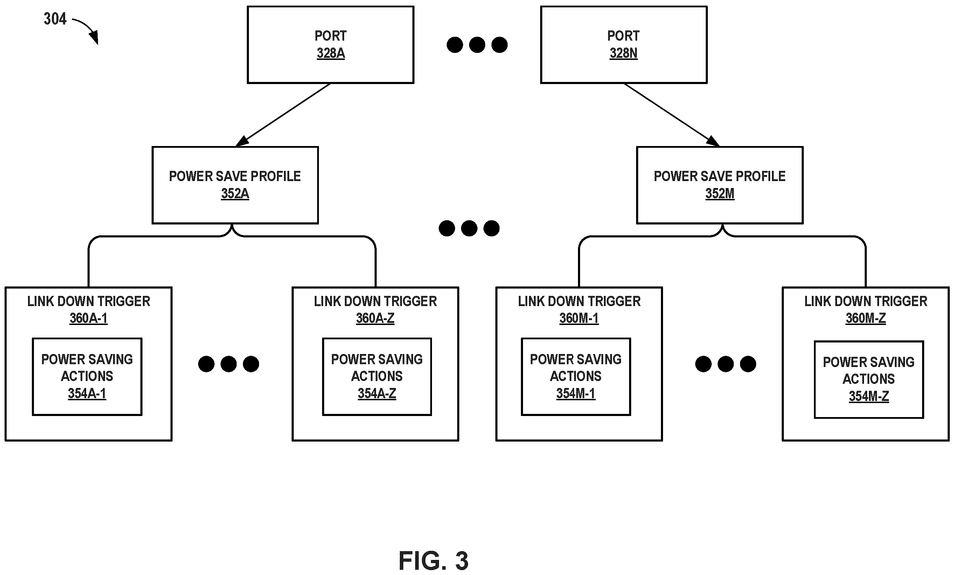

FIG. 3 is a conceptual diagram illustrating example network device 304 with example ports 328 associated with power save profiles 352, in accordance with principles described in this disclosure. Network device 304, power save profiles 352, and power saving actions 354 of FIG. 3 may be example or alternative implementations of network device 204, power save profile 252, and power saving actions 254 of FIG. 2, respectively.

Ports 328A-328N (collectively referred to herein as "ports 328") are physical ports to which cables are attached to enable transmitting and receiving optical and/or electrical signals for network communications. Each of ports 328 is associated with a physical interface that includes data path components (e.g., data path components 216 and/or data path components 226 of FIG. 2). The interface may include or be located on a network interface card, optical interface card, physical interface card (PIC), flexible PIC concentrator, modular port concentrator (MPC), Dense Port Concentrator (DPC), Passive Optical Network (PON) interface, Wavelength Division Multiplexing (WDM) interface, Fiber Channel, SONET/SDH, Active Optical Cables (AOCs), or other interface. Ports 328 may include transmit ports, receive ports, bidirectional ports, client ports, management ports, expansion ports, console ports, Ethernet ports, fiber optic ports, stacking ports, Small Form-factor Pluggable (SFP) ports, Enhanced Small Form-factor (SFP+) ports, XFP ports, or other ports.

Network device 304 may maintain a configurable power save profile of power save profile 352 for each port of port 328. Ports 328 may each be mapped to a unique power save profile of power save profiles 352A-352M (collectively referred to herein as, "power save profiles 352"). For example, port 328A may be mapped to power save profile 352A, port 328B may be mapped to power save profile 352B, port 328N may be mapped to power save profile 352M, and so on. Ports 328 may be mapped to power save profiles 352 during configuration of network device 304.

Network device 304 may include power save profiles 352 that are configured to apply power saving actions 354 for link down triggers 360. Power save profiles 352 may configure a link down trigger of link down triggers 360 to include multiple power saving actions (e.g., a first power saving action to disable a first data path component, a second power saving action to activate low power mode of a second data path component, a third power saving action to lower a power class of a third data path component, a fourth power saving action to change the operation mode of a fourth data path component, etc.). Power save profiles 352 may specify sets of power saving actions 354 for various link down triggers 360. For example, power save profile 352Amay specify sets of power saving actions 354A-1 - 354A-Z for each corresponding link down trigger 360A-1 - 360A-Z.

Link down triggers 360 may correspond to various link faults that may be detected during operation of network device 304. For example, link down triggers 360 may include a first link down trigger corresponding to a loss of signal of data components of ports 328, a high bit error rate (BER) of data components of ports 328, a high forward error correction (FEC) rate of data components of ports 328, a local fault of data components of ports 328, or the like. In some instances, power save profiles 352 may include a priority or ordered list of link down triggers 360 based on inherent characteristics of ports 328. Network device 304 may determine a set of link down triggers associated with error messages associated with a detected link fault. Network device 304 may classify a link fault as a link down trigger based on the priority associated with each link down trigger of the set of link down triggers. Network device 304 may activate a power save profile of power save profiles 352 by performing power saving actions of power saving actions 354 that correspond to a highest priority link down trigger of link down triggers 360 that is associated with the error messages output based on detected link faults.

Power saving actions 354 may include instructions that, when executed by processors of network device 304, result in data path components of a corresponding port of ports 328 to initiate particular power saving actions based on network device 304 determining a link fault is associated with a corresponding link down trigger of link down triggers 360. For example, power saving actions 354A-1 may include instructions that cause processors of network device 304 to lower a power class, change operation mode, disable, or activate low power mode of data path components associated with port 328A experiencing a link fault associated with link down trigger 360A-1.

In some instances, power save profiles 352 may include one or more default power save profiles developed based on particular ports included in network device 304. For example, power save profiles 352 may include a first default power save profile designed for a first 1.6T port of network device 304 (e.g., an optical device), a second default power save profile designed for a second 800G port of network device 304, and so on. In some examples, power save profile 352 may include a custom power save profile for any port of ports 328. Network device 304 may be configured with custom power save profiles by an operator of network device 304 overriding default power save profile with corresponding custom power save profiles.

Network device 304 may include power save profiles 352 with per link down trigger-based configuration of power saving actions 354. In other words, power save profiles 352 may be configured to apply different power saving actions based on inherent characteristics of link faults associated with different link down triggers. In this way, power save profiles 352 may be configured in a way that gives flexibility to operators of network device 304 in how aggressively or conservatively network device 304 is to initiate power saving actions depending on different types of link faults. For example, power save profile 352A bound to port 328A (e.g., a high bandwidth port) may be configured (e.g., by an operator of network device 304) with aggressive power saving actions 354A-1 (e.g., disabling many data path components of port 328A) for link faults associated with link down trigger 360A-1 (e.g., loss of signal or physical layer fault). Additionally, or alternatively, power save profile 352M bound to port 328N (e.g., a low bandwidth port) may be configured (e.g., by an operator of network device 304) with conservative power saving actions 354M-Z (e.g., disabling one of many data path components of port 328N) for link faults associated with link down trigger 360M-Z (e.g., high bit rate error).

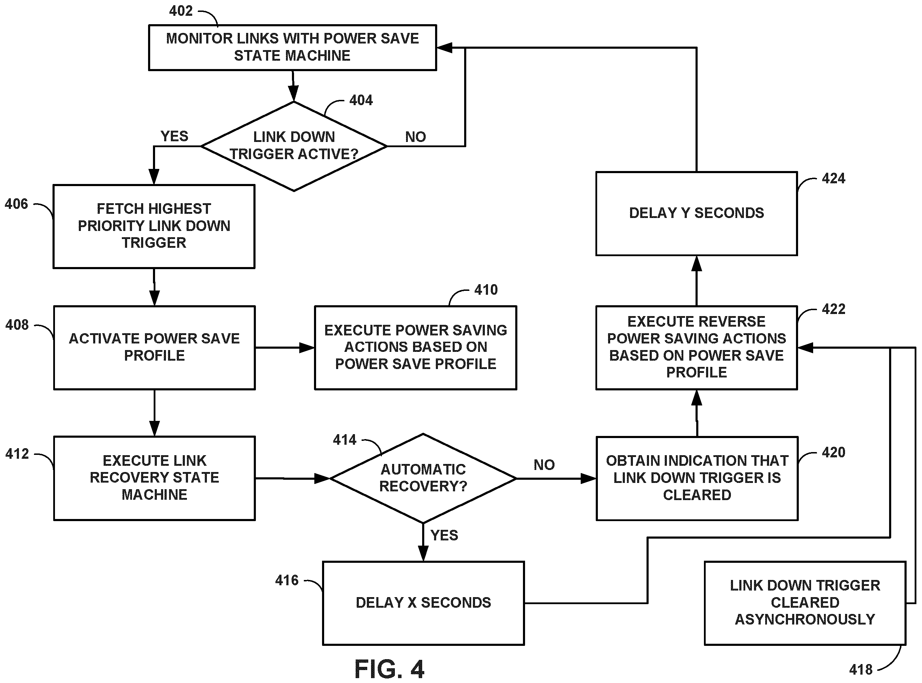

In some instances, network device 304 may execute power saving actions 354 of power save profiles 352 from an external controller stored at an external administrative system. The external administrative system may act as a centralized point to integrate the techniques described herein. For example, the external administrative system may automatically provision power save profile 353 to network devices (e.g., network device 304) based on port speeds and/or optics types associated with the network devices. The external administrative system may create default power save profiles based on information about different types network devices and provision corresponding, appropriate power save profiles to network devices. The external administrative system may trigger recovery of a link based on a fault rectification notification. In some examples, the external administrative system may implement machine learning algorithms in the external controller to predict and/or optimize a link restoration timer (e.g., during a link recovery process) and configure the link restoration timer on the network devices (e.g., network device 304). The external administrative system may implement machine learning to predict and/or optimize the link restoration timer on the fly based at least on fault type, fault signature, and/or other correlations based on various data sources at the network level. For example, during a link fault associated with a fiber cut - which may take a few days to resolve - the external administrative system may apply machine learning techniques to create a longer link restoration timer compared to other link faults that may be fixed quickly (e.g., in minutes). In this way, the external administrative system may support faster link restoration or link recovery time. Network devices (e.g., network device 304) implementing link restoration timers is described in further detail in FIG. 4 (e.g., step 416 of FIG. 4).

FIG. 4 is a flow diagram illustrating an example network device configured to initiate and recover from power saving actions, in accordance with principles described in this disclosure. FIG. 4 is described with respect to FIG. 2 for example purposes only.

Network device 204 may monitor links (e.g., links 7 of FIG. 1) with power save state machine 256 (402). For example, power save state machine 256 may implement network monitoring techniques to determine whether a link between network device 204 and another network device is inactive or otherwise down. Power save state machine 204 may determine whether a link down trigger is active (404). In other words, power save state machine 256 may determine whether a link associated with network device 204 is down, and determine whether one or more link down triggers associated with power save profiles 252 correspond to the determined link fault. Based on determining that no link down trigger associated with power save profile 252 is active, power save state machine 256 may continue to monitor links (NO branch 404) (402).

Based on determining at least one link down trigger associated with power save profiles 252 is active, power save state machine 256 may fetch the highest priority link down trigger of the at least one active link down triggers (YES branch 404) (406). For example, power save state machine 256 may detect link errors that correspond with different layers of port of network device 204 (e.g., different layers of an Ethernet port architecture). Power save state machine 256 may, for example, detect a first link error of loss of signal in an optics layer of a port of network device 204, a second link error of a link fault in a physical layer of the port, and so on.

Power save state machine 256 may determine which of the link fault errors is the highest priority based on inherent characteristics associated with the data path components with the link fault errors. For example, power save state machine 256 may determine the highest priority link down trigger based on the link fault error corresponding to a root cause of the link fault. Power save state machine 256 may order or list link fault errors based on a priority of port layers associated with the link fault errors. For example, power save state machine 256 may order link fault errors associated with a PCS layer of a port of network device 204 as a higher priority than link fault errors associated with a MAC layer of the port, and as a lower priority than link fault errors associated with a physical layer of the port. In some instances, an external administrative system may provide network device 204 with the highest priority link down trigger. Power save state machine 256 may determine a priority of link fault errors based on an order of link fault triggers included in power save profiles 252.

Power save state machine 256 may activate a power save profile associated with a link down trigger (408). For example, power save state machine 256 may activate a power save profile by executing power saving actions associated with a highest priority link down trigger. For example, power save state machine 256 may activate a power save profile by instructing processors 206 to execute power saving actions specified in the power save profile, such as placing optics components in a low power mode, disabling a transmitter laser, lowering a power class of data path component, changing an operation mode of data path components, disabling a line side SERDES component, disabling a host side SERDES component, disabling blocks (e.g., PHY, PCS, MAC, MACsec, PTP block; ASIC PCS, MAC block; etc.), disabling ASIC line-side SERDES, disabling a fabric SERDES, and so on. In another example, power save state machine 256 may activate a power save profile by instructing processors 206 to execute power saving actions specified in the power save profile, such as activating low power mode of a first block of components (e.g., activating low power mode of a block of optics components) and disabling a second block of components (e.g., PHY, PCS, MAC, MACsec, PTP block).

Network device 204 may execute link recovery state machine 258 (412). Network device 204 may execute link recovery state machine 258 based on power save state machine 256 initiating the power saving actions. Link recovery state machine 258 may or may not include an automatic recovery (414). For example, an operator of network device 204 may configure link recovery state machine 258 to automatically reverse power saving actions or to wait for the operator to provide an indication to reverse the power saving actions.

In instances where link recovery state machine 258 is configured to not perform automatic recovery, link recovery state machine 258 may obtain an indication that the link down trigger is cleared (NO branch 414) (420). For example, link recovery state machine 258 may send data for a graphical user interface of a computing device associated with network device 204 that power saving actions are complete due to a determined link down trigger. The computing device may receive an input provided by the operator that indicates a link fault associated with the link down trigger has been cleared or otherwise resolved. The computing device may send network device 204 the indication that the link down trigger is cleared.

In instances where link recovery state machine 258 is configured to perform automatic recovery, link recovery state machine 258 may delay for a period of time (YES branch 414) (416). For example, link recovery state machine 258 will wait for a predetermined period of time before executing reverse power saving actions (e.g., proceeding to step 422). In some instances, link recovery state machine 258, or an external administrative system, may implement machine learning techniques to predict and/or optimize a link restoration timer to be used as the predetermined period of time that link recovery state machine 258 will delay before executing reverse power saving actions. Link recovery state machine 258 may determine the link restoration timer based at least on a fault type, a fault signature, or other correlation based on various data sources at a network level. Link recovery state machine 258 may execute reverse power saving actions based determining a predetermined period of time, specified in the link restoration timer, has elapsed. Link recovery state machine 258 may execute reverse power saving actions based on the power save profile (422). Link recovery state machine 258 may execute reverse power saving actions based on the power save profile by undoing power saving actions executed at step 410, for example.

In some instances, link recovery state machine 258 may clear link down triggers asynchronously (418). For example, after delaying for the predetermined period of time, link recovery state machine 258 may execute reverse power saving actions based on the power save profile (422). Another network device - communicatively coupled to network device 204 via the link associated with the link fault - may asynchronously reverse any power saving actions the other network device may have executed based on a signal received from network device 204 indicating network device 204 executed the reverse power saving actions. Network device 204 and/or the other network device may asynchronously reverse power saving actions based on, for example, either network device 204 and/or the other network device determining the link down trigger is cleared, e.g., receiving a remote fault signal rather than an error signal associated with the detected link fault (e.g., an LOS error). Based on network device 204 and the other network device no longer experiencing any link fault errors after executing reverse power saving actions, the link down trigger has been cleared asynchronously. Based on either network device 204 or the other network device detecting a link fault associated with the same link, network device 204 and the other network device may reactivate power saving actions associated with respective power saving profiles by, for example, repeating steps 406-416.

Based on the link down trigger being cleared (e.g., by receiving the indication that the link down trigger is cleared, by determining the link down trigger is cleared asynchronously, no longer receiving link fault errors, etc.), link recovery state machine 258 may execute reverse power saving actions based on the power save profile (422). Link recovery state machine 258, in other words, may undo the power saving actions taken by power save state machine 256. Link recovery state machine 258 may delay for a period of time (e.g., delay for Y seconds) (424)..Link recovery state machine 258 may delay for a period of time defined by a time restoration period. The time restoration period may include a configurable period of time before instructing power save state machine 256 to continue monitoring links associated with network device 204 (e.g., proceeding to step 402). The time restoration period may be determined using machine learning models trained with mean time to restoration (MTTR), mean time to failure (MTTF), fault types, fault signatures, or other correlations associated with amounts of time different link down triggers are cleared. Link recovery state machine 258 may delay for a period of time specified in the time restoration timer to allow for the link associated with link fault to be reestablished bidirectionally between network devices communicating using the link. For example, a first network device (e.g., network device 204) associated with the link may delay for Y seconds, as defined in the time restoration timer, to allow a second network device associated with the link to execute any reverse power saving actions that the second network device may have executed. In this way, link recovery state machine 258 may recover links bidirectionally based on whether a link fault has cleared in the network.

Link recovery state machine 258 may send an indication to power save state machine 256 that recovery is complete. Power save state machine 256 may continue to monitor links of network device 204 (402). For example, power save state machine 256 may monitor links of network device 204 based on receiving the indication from link recovery state machine that network device 204 is operational. Based on power save state machine 256 determining the link fault persists, power save state machine 256 may execute power saving actions by, for example, repeating steps 406-412.

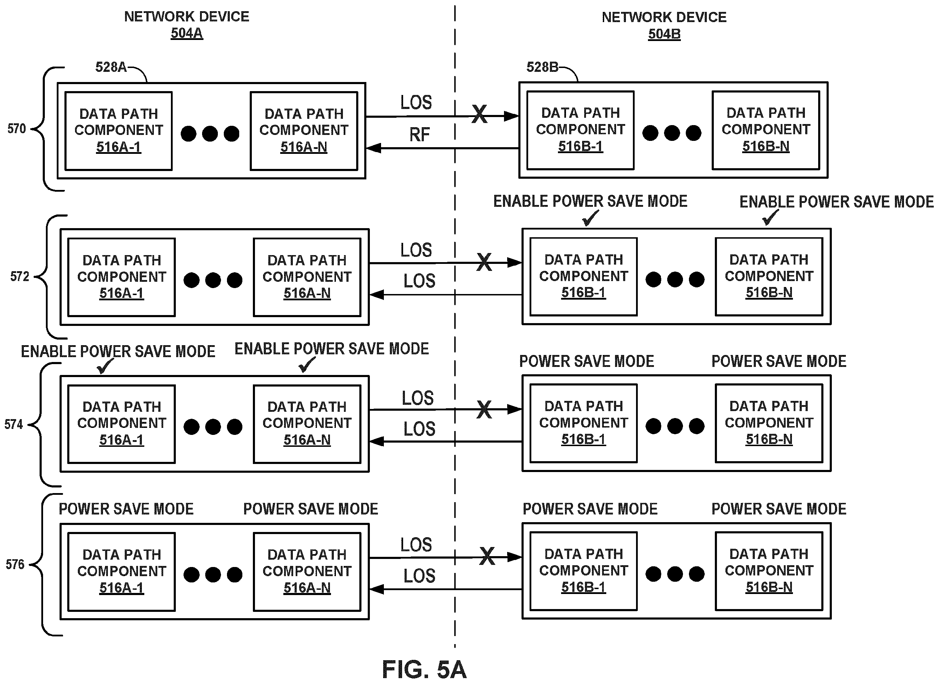

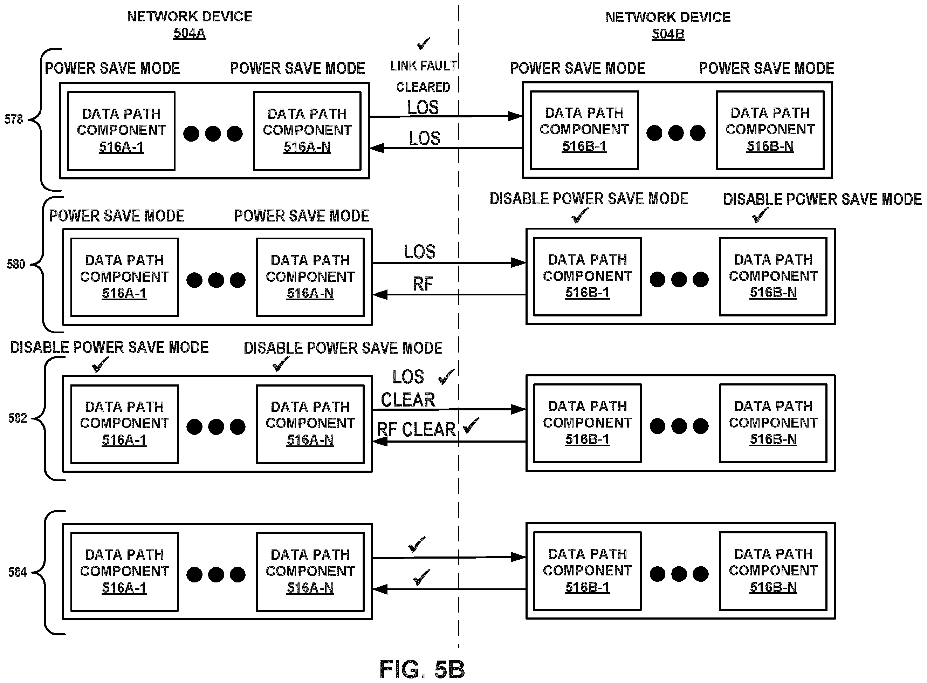

FIGS. 5A and 5B are conceptual diagrams illustrating example network devices configured to execute power saving actions and asynchronously execute reverse power saving actions, in accordance with principles described in this disclosure. Network device 504A and network device 504B of FIG. 5 may be example or alternative implementations of any of network devices 104 of FIG. 1. Port 528A of network device 504A and port 528B of network device 504B may be example or alternative implementations of any of ports 328 of FIG. 3. Data path components 516A-1 - 516A-N (collectively referred to herein as data path components 516A) and data path components 516B-1 - 516B-N (collectively referred to herein as data path components 516B) of FIG. 5 may be an example or alternative implementations of any of data path components 516 and/or data path components 226 of FIG. 2.

At step 570, network device 504B may detect a link fault of a link between port 528A network device 504A and port 528B of network device 504B. For example, network device 504B may determine a receiver loss of signal (LOS) error associated with the link between port 528A network device 504A and port 528B of network device 504B. Port 528A may detect a remote fault (RF) error signal. Port 528A detect a remote fault because the link between port 528A and port 528B being bidirectional. Port 528A may detect a remote fault or other fault according to error or fault signaling protocols associated with network devices 504 (e.g., Ethernet link fault signaling).

At step 572, network device 504B may enable power save mode of data path components 516B. Network device 504B may enable power save mode of data path components 516B by activating a power save profile associated with the detected link fault. For example, network device 504B may determine a link down trigger associated with the link fault of a receiver loss of signal. Network device 504B may activate a power save profile associated with port 528B by executing power saving actions mapped to the link down trigger. Network device 504B may execute the power saving actions to enable power save mode of data path components 516B. Based on enabling power save mode of data path components 516B, port 528A of network device 504A may detect a receiver loss of signal link fault associated with the link between port 528B and port 528A.

At step 574, network device 504A may enable power save mode of data path components 516A. Network device 504A may enable power save mode of data path components 516A based on network device 504A detecting a link fault (e.g., receiver loss of signal) of a link between port 528B and port 528A. Network device 504A may enable power save mode of data path components 516A by activating a power save profile associated with the detected link fault. Network device 504A may activate a power save profile associated with port 528A by executing power saving actions mapped to the link down trigger. Network device 504A may execute the power saving actions to enable power save mode of data path components 516A.

At step 576, port 528A of network device 504A and port 528B of network device 504B are in power save mode. That is, port 528A and 528B are not consuming power at full capacity. Network device 504A and network device 504B may continue to detect the link fault errors (e.g., LOS) even when in power save mode. Network device 504A and/or 504B may send an indication to an operator or an administrative computing system specifying that the respective network device is in power save mode. By port 528A entering power save mode based on receiving a fault error associated with port 528B entering power save mode, port 528A and 528B are synchronized during power saving in a way that requires little to no input from an operator of network devices 504 during execution of ports 528.

At step 578, network devices 504 may determine that the link fault has cleared. In instances where network devices 504 implement automatic recovery, network devices 504 may delay for a predetermined period of time defined in corresponding link restoration timers. Network devices 504 may delay for a time specified in the corresponding link restoration timers prior to executing any reverse power saving actions (e.g., disabling power save mode as illustrated in steps 580 and 582). Network devices 504 may be configured with link restoration timers that correspond to link down triggers determined by network devices 504. In instances where network devices 504 do not implement automatic recovery, network devices 504 may receive an indication, from an operator associated with network devices 504 and/or an external administrative system with a centralized controller associated with network devices 504, that the link fault has cleared. Network devices 504 may be able to detect a link fault error, as well as when the link fault error is cleared, even when ports 528 are in low power mode. For example, network devices 504 may determine the link fault has cleared while ports 528 still receive the link fault errors indicating a loss of signal (LOS) resulting from data path components 516 of ports 528 being in low power mode.

At step 580, network device 504B may disable power save mode of data path components 516B. Network device 504B may disable power save mode of data path components 516B based on an expiration of a link restoration timer and/or an indication specifying the link fault has cleared. Network device 504B may disable power save mode of data path components 516B by reversing the power saving actions taken at step 572. Port 528A of network device 504A may detect a remote fault error. Network device 504B may still detect a link fault (e.g., a loss of signal error) of the link between port 528A and 528B because data path components 516A are still in low power mode.

At step 582, network device 504A may disable power save mode of data path components 516A. Network device 504A may disable power save mode of data path components 516A based on a clearing of the LOS link fault error. Network device 504A may disable power save mode of data path components 516A by reversing the power saving actions taken at step 574. In this way, the loss of signal detected by network device 504B, as well as the remote fault error detected by network device 504A, are cleared.

At step 584, port 528A of network device 504A and port 528B of network device 504B are at an operational state, and the link between port 528A and 528B is recovered. That is, port 528A and port 528B are consuming a normal, operational amount of power, and the link between port 528A and 528B is bi-directionally restored. In instances, where the link is not restored after a period of time (e.g., a period of time defined in a time restoration timer as discussed in step 424 of FIG. 4), port 528A and/or port 528B may re-execute the power saving actions to revert back to the power save mode. In this way, the bidirectional link between ports 528A and 528B may be asynchronously restored without input from an operator of network devices 504.

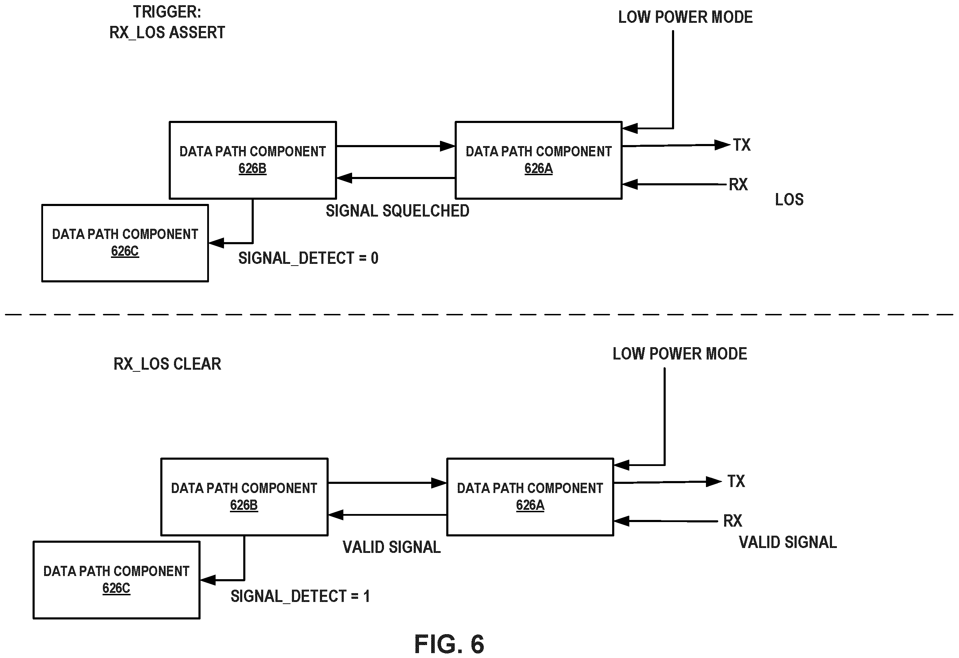

FIG. 6 is a conceptual diagram illustrating example data path components configured to determine a link fault is cleared, in accordance with principles described in this disclosure. Data path component 626A, data path component 626B, and data path component 626C of FIG. 6 may be example or alternative implementations of any of data path components 216 and/or data path components 226 of FIG. 2. Data path components 626 may be a block of data path components including data path component 626A, data path component 626B, and/or data path component 626C such that data path components 626 include specialized processing circuitry or logic to enable low power functionality of data path components 626 individually or in combination.

Based on a link fault associated with a network device including data path components 626A-626C, data path component 626A may send a squelch signal to data path component 626B. For example, data path signal 626A may squelch an RX Output signal, on a SERDES, to data path component 626B based on the network device determining a link fault associated with a link down trigger of a receiver (RX) loss of signal (LOS). Data path component 626B may not send any signal to data path component 626C. Data path component 626C may thus detect no signal. Data path components 626A-626C may then enter low power mode.

Data path components 626 may support a flag that indicates whether a valid signal is detected. Data path components 626 may detect a valid signal even when data path components 626 are in low power mode and/or other types of power saving modes. For example, data path components 626 may be able to detect a valid signal based on a flag indicating the RX-LOS assert error has been cleared. Based on a valid signal detected by the network device including data path components 626A-626C, data path component 626A may send a valid signal to data path component 626B. For example, data path component 626A may include an optics module that sends a valid RX Output signal, on the SERDES, to data path component 626B based on the network device determining the receiver loss of signal link down trigger is cleared. Data path component may send a valid signal to data path component 626C. Data path component 626C may thus detect a signal. A network device with data path components 626 may initiate recovery of data path components 626 based on data path component 626C detecting a valid signal. For example, data path components 626A-626C may disable lower power mode based on detecting the valid signals. In this way, power saving actions and link restoration actions are synchronized for data path components 626A-626C.

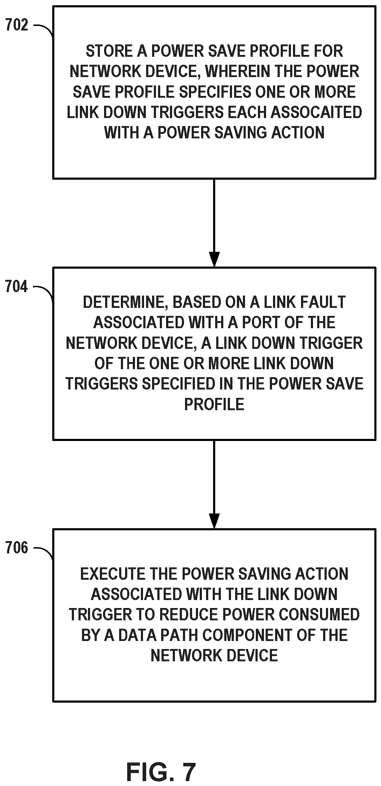

FIG. 7 is a flow diagram illustrating an example process for executing power saving actions, in accordance with principles described in this disclosure. FIG. 7 is discussed with respect to FIG. 2 for example purposes only.

Network device 204 may store a power save profile for network device 204, wherein the power save profile specifies one or more link down triggers each associated with a power saving action (702). Network device 204 may store a default power save profile, uploaded by an administrator of a network including network device 204 (e.g., network 102). Network device 204 may store a default power save profile with pre-defined link down triggers and corresponding power saving actions that are defined based on inherent characteristics of network device 204. In some examples, network device 204 may store a customized power save profile with customized link down triggers and corresponding power saving actions that are defined based on whether an operator of network device 204 wants an aggressive or conservative power saving approach.

Network device 204 may determine, based on a link fault associated with a port of network device 204, a link down trigger of the one or more link down triggers specified in the power save profile (704). In some instances, network device 204 may determine the link down trigger as a highest priority link down trigger associated with a set of candidate link down triggers associated with a detected link fault. For example, network device 204 may determine that multiple link down triggers are a set of candidate link down triggers associated with a single link fault based on multiple error messages output based on the link fault. Network device 204 may determine the link down trigger as the highest priority link down trigger based on an organization of link down triggers specified in the power save profile.

Network device 204 may execute power saving actions associated with the link down trigger to reduce power consumed by a data path component of network device 204 (706). Network device 204 may activate a power save profile by executing power saving actions corresponding to the determined link down trigger. For example, based on the determined link down trigger, network device 204 may enable low power mode of at least one data path component, lower a power class of at least one data path component, change an operation model of at least one data path component, and/or disable at least one data path component. Network device 204 may execute power saving actions to a block of data path components that include independent processing circuitry or logic for activating particular power saving functions of data path components included in the block of data path components. Network device 204 may execute power saving actions to data path components of the block of data path components either individually or in combination.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective, there has now been described a network device comprising a physical interface comprising a port and a data path component; a storage device configured to store a power save profile for the network device, wherein the power save profile specifies one or more link down triggers each associated with a power saving action; and processing circuitry having access to the storage device. The processing circuitry may be configured to determine, based on a link fault associated with the port, a link down trigger of the one or more link down triggers specified in the power save profile. The processing circuitry may further be configured to execute the power saving action associated with the link down trigger to reduce power consumed by the data path component.

Further examples of feature combinations taught by the present disclosure are set out in the following numbered clauses:
1. A network device comprising:
   a physical interface comprising a port and a data path component;
   a storage device configured to store a power save profile for the network device, wherein the power save profile specifies one or more link down triggers each associated with a power saving action; and
   processing circuitry having access to the storage device, the processing circuitry configured to:
   determine, based on a link fault associated with the port, a link down trigger of the one or more link down triggers specified in the power save profile, and
   execute the power saving action associated with the link down trigger to reduce power consumed by the data path component.
2. The network device of clause 1, wherein the power save profile is associated with the port, and wherein the processing circuitry is configured to obtain the power save profile based on the port associated with the link fault.
3. The network device of clause 1, wherein the processing circuitry is further configured to: execute, based on an initiation of recovery of the data path component, a reverse power saving action that undoes the power saving action.
4. The network device of clause 3, wherein to initiate recovery of the data path component, the processing circuitry is configured to delay according to a link restoration timer.
5. The network device of clause 3, wherein to initiate recovery of the data path component, the processing circuitry is configured to obtain an indication specifying the link fault is cleared.
6. The network device of clause 3, wherein to initiate recovery of the data path component, the processing circuitry is configured to: send, to a device in communication with the network device, an indication that the link fault is cleared.
7. The network device of clause 3, wherein the data path component is a block of data path components comprising a first data path component, a second data path component, and a third data path component, and wherein to initiate recovery of the data path component, the processing circuitry is configured to:
   obtain, by the first data path component, a first valid signal;
   send, by the first data path component to the second data path component, a second valid signal;
   detect, by the second data path component, a third valid signal destined for the third data path component; and initiate, based on detecting the third valid signal, recovery of the data path components.
8. The network device of clause 1, wherein the one or more link down triggers include at least one of: a loss of signal, a loss of lock, a high bit error rate, a high rate of forward error corrections, or a local fault.
9. The network device of clause 1, wherein the data path component comprises at least one of: an optics component, a physical layer component, and an application specific integrated circuit component.
10. The network device of clause 1, wherein the power saving action includes instructions to execute at least one of: enable low power mode of at least one data path component of the data path components, lower a power class of at least one data path component of the data path components, change an operation mode of at least one data path component, and disable at least one data path component of the data path components.
11. The network device of clause 1, wherein to determine the link down trigger of the one or more link down triggers specified in the power save profile, the processing circuitry is configured to:
   determine, based on one or more error messages associated with the link fault, a set of link down triggers from the one or more link down triggers associated;
   determine the link down trigger from the set of link down triggers based on a priority associated with each link down trigger of the set of link down triggers.
12. The network device of clause 1, wherein the port is a first port, the data path component is a first data path component, the power save profile is a first power save profile associated with the first port, the one or more link down triggers are a first set of one or more link down triggers, the link down trigger is a first link down trigger, the power saving action is a first power saving action, and the link fault is a first link fault, and wherein the processing circuitry is further configured to:
   store a second power save profile associated with a second port of the network device, wherein the second power save profile specifies a second set of one or more link down triggers each associated with a second power saving action;
   determine, based on a second link fault associated with the second port, a second link down trigger of the second set of one or more link down triggers specified in the second power save profile; and
   execute the second power saving action associated with the second link down trigger to reduce power consumed by the second data path component.
13. A method comprising:
   storing, by a network device including a port and a data path component, a power save profile for the network device, wherein the power save profile specifies one or more link down triggers each associated with a power saving action;
   determining, by the network device and based on a link fault associated with the port, a link down trigger of the one or more link down triggers specified in the power save profile; and
   executing, by the network device, the power saving action associated with the link down trigger to reduce power consumed by the data path component.
14. The method of clause 13, wherein the power save profile is associated with the port, and wherein the method comprises: obtaining the power save profile based on the port associated with the link fault.
15. The method of clause 13, further comprising: executing, based on an initiation of recovery of the data path component, one or more reverse power saving actions that undo the one or more power saving actions.
16. The method of clause 13, wherein determining the link down trigger of the one or more link down triggers specified in the power save profile comprises:
   determining, based on one or more error messages associated with the link fault, a set of link down triggers from the one or more link down triggers associated;
   determining the link down trigger from the set of link down triggers based on a priority associated with each link down trigger of the set of link down triggers.
17. The method of clause 13, wherein the port is a first port, the data path component is a first data path component, the power save profile is a first power save profile associated with the first port, the one or more link down triggers are a first set of one or more link down triggers, the link down trigger is a first link down trigger, the power saving action is a first power saving action, and the link fault is a first link fault, and wherein the method further comprising:
   storing a second power save profile associated with a second port of the network device, wherein the second power save profile specifies a second set of one or more link down triggers each associated with a second power saving action;
   determining, based on a second link fault associated with the second port, a second link down trigger of the second set of one or more link down triggers specified in the second power save profile; and
   executing the second power saving action associated with the second link down trigger to reduce power consumed by the second data path component.
18. A computer-readable medium comprising computer-implementable instructions that, when executed, causes processing circuitry of a network device to:
   store a power save profile for the network device, wherein the power save profile specifies one or more link down triggers each associated with a power saving action;
   determine, based on a link fault associated with a port of the network device, a link down trigger of the one or more link down triggers specified in the power save profile, and
   execute the power saving action associated with the link down trigger to reduce power consumed by a data path component of the network device.
19. The computer-readable medium of clause 18, wherein the power save profile is associated with the port, and wherein the instructions cause the processing circuitry of the network device to obtain the power save profile based on the port associated with the link fault.
20. The computer-readable medium of clause 18, wherein the instructions further cause the processing circuitry of the network device to: execute, based on an initiation of recovery of the data path component, a reverse power saving action that undoes the power saving action.

## Claims

1. A network device comprising:
a physical interface comprising a port and a data path component;
a storage device configured to store a power save profile for the network device, wherein the power save profile specifies one or more link down triggers each associated with a power saving action; and
processing circuitry having access to the storage device, the processing circuitry configured to:
determine, based on a link fault associated with the port, a link down trigger of the one or more link down triggers specified in the power save profile, and
execute the power saving action associated with the link down trigger to reduce power consumed by the data path component.

2. The network device of claim 1, wherein the power save profile is associated with the port, and wherein the processing circuitry is configured to obtain the power save profile based on the port associated with the link fault.

3. The network device of any of claims 1-2, wherein the processing circuitry is further configured to: execute, based on an initiation of recovery of the data path component, a reverse power saving action that undoes the power saving action.

4. The network device of claim 3, wherein to initiate recovery of the data path component, the processing circuitry is configured to delay according to a link restoration timer.

5. The network device of claim 3, wherein to initiate recovery of the data path component, the processing circuitry is configured to obtain an indication specifying the link fault is cleared.

6. The network device of claim 3, wherein to initiate recovery of the data path component, the processing circuitry is configured to: send, to a device in communication with the network device, an indication that the link fault is cleared.

7. The network device of claim 3, wherein the data path component is a block of data path components comprising a first data path component, a second data path component, and a third data path component, and wherein to initiate recovery of the data path component, the processing circuitry is configured to:
obtain, by the first data path component, a first valid signal;
send, by the first data path component to the second data path component, a second valid signal;
detect, by the second data path component, a third valid signal destined for the third data path component; and
initiate, based on detecting the third valid signal, recovery of the data path components.

8. The network device of any of claims 1-7, wherein the one or more link down triggers include at least one of: a loss of signal, a loss of lock, a high bit error rate, a high rate of forward error corrections, or a local fault.

9. The network device of any of claims 1-8, wherein the data path component comprises at least one of: an optics component, a physical layer component, and an application specific integrated circuit component.

10. The network device of any of claims 1-9, wherein the power saving action includes instructions to execute at least one of: enable low power mode of at least one data path component of the data path components, lower a power class of at least one data path component of the data path components, change an operation mode of at least one data path component, and disable at least one data path component of the data path components.

11. The network device of any of claims 1-10, wherein to determine the link down trigger of the one or more link down triggers specified in the power save profile, the processing circuitry is configured to:
determine, based on one or more error messages associated with the link fault, a set of link down triggers from the one or more link down triggers associated;
determine the link down trigger from the set of link down triggers based on a priority associated with each link down trigger of the set of link down triggers.

12. The network device of any of claims 1-11, wherein the port is a first port, the data path component is a first data path component, the power save profile is a first power save profile associated with the first port, the one or more link down triggers are a first set of one or more link down triggers, the link down trigger is a first link down trigger, the power saving action is a first power saving action, and the link fault is a first link fault, and wherein the processing circuitry is further configured to:
store a second power save profile associated with a second port of the network device, wherein the second power save profile specifies a second set of one or more link down triggers each associated with a second power saving action;
determine, based on a second link fault associated with the second port, a second link down trigger of the second set of one or more link down triggers specified in the second power save profile; and
execute the second power saving action associated with the second link down trigger to reduce power consumed by the second data path component.

13. A method comprising:
storing, by a network device including a port and a data path component, a power save profile for the network device, wherein the power save profile specifies one or more link down triggers each associated with a power saving action;
determining, by the network device and based on a link fault associated with the port, a link down trigger of the one or more link down triggers specified in the power save profile; and
executing, by the network device, the power saving action associated with the link down trigger to reduce power consumed by the data path component.

14. The method of claim 13, further comprising steps corresponding to the functionality recited in any of claims 2-12.

15. A computer readable medium comprising computer-implementable instructions for causing one or more programmable processors to become configured as the network device of any of claims 1-12 or to perform the method of any of claims 13-14.
